Europäisches Patentamt

European Patent Office

Office européen des brevets

(19)

(11) Veröffentlichungsnummer : **0 226 844 B2**

(12) **NEUE EUROPÄISCHE PATENTSCHRIFT**

(45) Veröffentlichungstag der neuen Patentschrift :
27.05.92 Patentblatt 92/22

(51) Int. Cl.$^5$ : **B60K 28/16**

(21) Anmeldenummer : 86116290.7

(22) Anmeldetag : 24.11.86

(54) **Hydrostatischer Fahrantrieb für Kraftfahrzeuge, mit wenigstens zwei Hydromotoren mit Ausgleichs-Regeleinrichtung.**

Die Akte enthält technische Angaben, die nach dem Eingang der Anmeldung eingereicht wurden und die nicht in dieserPatentschrift enthalten sind.

(30) Priorität : 05.12.85 DE 3543073

(43) Veröffentlichungstag der Anmeldung :
01.07.87 Patentblatt 87/27

(45) Bekanntmachung des Hinweises auf die Patenterteilung :
12.07.89 Patentblatt 89/28

(45) Bekanntmachung des Hinweises auf die Entscheidung über den Einspruch :
27.05.92 Patentblatt 92/22

(84) Benannte Vertragsstaaten :
DE FR GB IT

(56) Entgegenhaltungen :
DE-B- 2 135 279
US-A- 4 241 577
US-A- 4 244 184
US-A- 4 399 886

(73) Patentinhaber : Hydromatik GmbH
Glockeraustrasse 2
W-7915 Elchingen 2 (DE)

(72) Erfinder : Sommer, Josef
Galgenweg 18
W-7938 Oberdischingen (DE)

(74) Vertreter : Körber, Wolfhart, Dr.rer.nat. et al
Patentanwälte Dipl.-Ing. H. Mitscherlich
Dipl.-Ing. K. Gunschmann Dr.rer.nat. W.
Körber Dipl.Ing. J. Schmidt-Evers Dipl.-Ing.W.
Melzer Steinsdorfstrasse 10
W-8000 München 22 (DE)

EP 0 226 844 B2

## Beschreibung

Die Erfindung bezieht sich auf einen hydrostatischen Fahrantrieb nach dem Oberbegriff des Anspruchs 1.

Fahrantriebe dieser Art werden auf dem Markt vertrieben sowie in der Praxis eingesetzt und gehören deshalb zum Stand der Technik. Es ist der Zweck der Regeleinrichtung des bekannten Fahrantriebs, einen bei Kurvenfahrt wirksamen Ausgleich zwischen den Hydromotoren bzw. den angetriebenen Rädern herbeizuführen. Dies wird dadurch erreicht, daß die Hydromotoren in Abängigkeit vom Arbeitsdruck des hydrostatischen Getriebes und vom Steuerdruck verstellt bzw. geregelt werden.

Der bekannte Fahrantrieb hat sich in der Praxis bewährt. Ein Nachteil ist jedoch noch darin zu sehen, daß keine Differenzialsperrwirkung eintritt, wenn eines oder mehrere der Räder weniger Bodenhaftung haben als die anderen Räder. In einem solchen Fall drehen das oder diese Räder und der zugeordnete Hydromotor oder Hydromotoren durch, was zu einer Beschädigung des oder der Hydromotoren führen kann. Dieser Nachteil ist insbesondere bei solchen Fahrzeugen gravierend, bei denen aufgrund der Geländebeschaffenheit mit vorbeschriebenen Schwierigkeiten zu rechnen ist. Dies gilt insbesondere für rad- und auch kettengetriebene Baufahrzeuge wie Bagger, Radlader, Erdschieber und dgl.

Der Erfindung liegt die Aufgabe zugrunde, einen Fahrantrieb der eingangs bezeichneten Art so auszugestalten, daß beim Überschreiten eines vorbestimmten Drehzahl wenigstens eines Rades die Drehzahl dieses oder dieser Räder sich gegenüber dem oder den anderen Rädern nicht erhöhen kann.

Diese Aufgabe wird durch die kennzeichnenden Merkmale im Anspruch 1 oder 2 gelöst.

Bei der erfindungsgemäßen Ausgestaltung nach Anspruch 1 wird der oder die aufgrund des Durchdrehens zugehöriger Räder bzw. Fahrkette über eine vorgegebene Drehzahldifferenz zwischen diesem und wenigstens einem anderen Hydromotor hochlaufende Hydromotor im Sinne einer Verringerung seiner Schluckmenge verstellt. Dies führt zu einer Vergrößerung des Übersetzungsverhältnisses zwischen diesem dem oder den durchdrehenden Hydromotoren und der Hauptpumpe, während das Übersetzungsverhältnis des oder der nicht hochlaufenden durchdrehenden Hydromotoren unverändert bleibt. Infolgedessen ergibt sich eine günstige Verteilung des von der Antriebsmaschine aufgebrachten Drehmomentes. Es wird nämlich auf den oder die nicht hochlaufenden Hydromtoren ein vergrößertes Drehmoment übertragen, wodurch die Wirksamkeit des Fahrantriebs in angestrebter Weise verbessert wird.

Die Drehzahldifferenz kann bei der erfindungsgemäßen Ausgestaltung ein unveränderlicher oder ein in Abhängigkeit von Fahrbedingungen veränderlicher Wert sein.

Die Ausgestaltung nach Anspruch 2 ermöglicht eine Drehzahlbegrenzung, die auf Antriebsmaschinenbremsung beruht. Dabei liegt dieser erfindungsgemäßen Ausgestaltung die Erkenntnis zugrunde, daß die Hydromotoren bei Lastumkehr Pumpenfunktion übernehmen und deshalb ein kleines Übersetzungsverhältnis die Bremsung ermöglicht. Diese Ausgestaltung ist zunächst unabhängig von der Ausgestaltung gemäß Anspruch 1. Dem Anspruch 2 ist deshalb selbständige erfinderische Bedeutung zuzumessen.

Anspruch 3 enthält einfache Bauteile, die eine funktionsfähige Steuereinrichtung ergeben.

Die Ausgestaltung nach Anspruch 4 führt schon deshalb zu einer Vereinfachung der Anordnung, weil die Regeleinrichtung und die Steuereinrichtung an ein und demselben Verstellgestänge wirken.

Im Rahmen der Erfindung lassen sich verschiedene Funktionsprinzipien nämlich eine progressive und eine degressive Funktion der Steuereinrichtung verwirklichen.

Im Rahmen der Erfindung sind auch eine Vielzahl Steuerungsarten möglich. Es ist z. B. möglich, die Steuereinrichtung durch einen Elektromagneten oder gemäß Anspruch 6 durch ein Steuerventil zu bilden. Das Steuerventil kann in vorteilhafter Weise in der vorhandenen Steuerleitung angeordnet sein, wobei vorzugsweise für die erste Steuereinrichtung eine Steuerdruckerhöhung und für die zweite Steuereinrichtung eine Steuerdruckverminderung eingestellt wird (Ansprüche 7 und 8).

Die Ausbildungen nach den Ansprüchen 9 und 10 ergeben einfache Lösungen unter der Bedingung, daß die Steuereinrichtung den vom Arbeitsdruck des hydrostatischen Getriebes beaufschlagten Stellelementes entgegenwirkt.

Gemäß Anspruch 12 dient eine Steuereinrichtung sowohl zur Steuerdruckerhöhung als auch zur - verminderung.

Bei den Ausgestaltungen nach den Ansprüchen 13 und 15 wird eine Anordnung mit zwei Steuerleitungsabschnitten unterschiedlicher Steuerdrücke dazu ausgenutzt, mittels des Steuerventils den zum Servo-Ventil gelangenen Steuerdruck erfindungsgemäß zu erhöhen. Diese Ausgestaltung eignet sich insbesondere beim Vorhandensein eines den Steuerdruck-Unterschied einstellenden Steuerventils gemäß DE-PS 22 47 437.

Es ist im Rahmen der Erfindung möglich, gemäß den Ansprüchen 14 bis 16 die Steuerleitungen so zu verzweigen, daß alle Regeleinrichtungen bzw. Steuereinrichtungen von einer Hilfspumpe beaufschlagt werden können.

Gemäß Anspruch 17 dient eine zweite Steuerrichtung zur Verstellung aller Hydromotoren.

Nachfolgend wird die Erfindung anhand in Zeichnungen dargestellten bevorzugten Ausführungsbeispielen erläutert. Es zeigt:

Fig. 1 einen elektrohydraulischen Steuerplan für einen Fahrantrieb mit einem hydrostatischen Getriebe;

Fig. 2 ein abgewandeltes Ausführungsbeispiel der Erfindung.

Das hydrostatische Getriebe 1 weist in einem durch Arbeitsleitungen 2, 3 gebildeten Arbeitskreis eine für den Betrieb in wahlweise beide Drehrichtungen eingerichtete Hauptpumpe 4 verstellbarer Fördermenge und vier natürlich ebenfalls für den Betrieb in wahlweise beide Drehrichtungen eingerichtete Hydromotoren 5 bis 8 auf. Jeder Hydromotor 5 bis 8 wird in Parallelanordnung des ihm zugeordneten Arbeitsleitungsabschnitts gespeist und treibt über jeweils eine Radwelle 9 ein Rad an. Die vorhandenen vier Räder sind mit 11 bis 14 bezeichnet. Es handelt sich um einen elektrohydraulischen Allradantrieb für ein Baufahrzeug wie ein Radlader mit vier Rädern.

Das hydrostatische Getriebe 1 wird durch eine Antriebsmaschine 15 angetrieben, die z.B. eine Verbrennungskraftmaschine sein kann. Die Antriebsmaschine 15 treibt gleichzeitig auch eine Hilfspumpe 16 an, die einen drehzahlabhängigen Steuerdruck in einer Steuerleitung 17 erzeugt. In der Steuerleitung 17 ist ein ansich bekanntes Steuerventil 18 angeordnet, das als Stromteilerventil und Druckreduzierventil fungiert. In dem vom Steuerventil 18 ausgehenden Steuerleitungsabschnitt 19 ist ein gegenüber dem Steuerdruck im Steuerleitungsabschnitt 21 verringerter Steuerdruck vorhanden. Der Aufbau und zur Funktion des Steuerventils 18 wird auf DE-PS 22 47 437 verwiesen. Der reduzierte Steuerdruck wird in ansich bekannter Weise zur Einstellung der Fördermenge der Hauptpumpe 4 herangezogen und wirkt hierzu auf den Druckraum 22 eines Stellmotors 23 in Form einer Zylinder-Kolben-Einheit. Der Stellmotor 23 weist für den reversierbaren Betrieb der Hauptpumpe 4 einen federzentrierten Doppelkolben 24 auf, der mit dem Verstellelement der Hauptpumpe 4 verbunden ist. Die Förderrichtung der Hauptpumpe 4 wird durch ein elektrisch betätigbares Umschaltventil 25 (4/3-Wegeventil) eingestellt.

Der Steuerleitungsabschnitt 21 wird in an sich bekannter Weise zur Speisung des Arbeitskreises des hydrostatischen Getriebes 1 herangezogen, was bei 26 ersichtlich ist.

Jedem Hydromotor 5 bis 8 ist eine allgemein mit 31 bezeichnete Regeleinrichtung zur Einstellung der Schluckmenge in Abhängigkeit vom Arbeitsdruck im hydrostatischen Arbeitskreis und vom Steuerdruck, hier dem reduzierten Steuerdruck im Steuerleitungsabschnitt 19, zugeordnet. Die Regeleinrichtung 31 besteht aus einem durch eine Zylinder-Kolben-Einheit gebildeten Stellmotor 32 mit zwei Druckräumen 33, 34, der durch ein Servo-Ventil 35 gesteuert wird und zwar durch geregelte Beaufschlagung der Druckräume 33, 34 mit dem Arbeitsdruck des hydrosratischen Getriebes 1. Der mit 33 bezeichnete Druckraum (Ringraum) ist durch eine Verbindungsleitung 36 und einer abzweigenden Verbindungsleitung 37 mit beiden Arbeitsleitungen 2, 3 verbunden. Die Beaufschlagung des Druckraumes 33 mit dem Arbeitsdruck ist ständig und zwar je nach Förderrichtung der Hauptpumpe 4 entweder aus der Arbeitsleitung 2 oder der Arbeitsleitung 3. Dies wird durch Rückschlagventile 38, 39 ermöglicht, in den Verbindungsleitungen 36, 37 angeordnet sind und die jeweils die keinen Arbeitsdruck enthaltende Arbeitsleitung 2, 3 sperren.

In einer vom anderen Druckraum 34 zur Verbindungsleitung 36 führenden Verbindungsleitung 41 ist das Servo-Ventil 35 angeordnet, das den Durchgang in der Verbindungsleitung 41 steuert. Das Servo-Ventil 35 wird durch einen Steuerleitungsabschnitt 42 im Normalfall mit dem Steuerdruck und durch eine von der Verbindungsleitung 36 abzweigende Verbindungsleitung 43 mit dem Arbeitsdruck beaufschlagt. Der Arbeitsdruck und der Steuerdruck wirken gegeneinander, wobei der Ventilkörper des Servo-Ventils 35 zusätzlich unter der Spannung einer verstellbaren Ventilfeder 44 steht. Das Servo-Ventil 35 ist zwischen einer Stellung, in der es die Verbindungsleitung 41 öffnet und einer Stellung, in der es die Verbindung des Druckraums 34 mit der Verbindungsleitung 36 schließt und dagegen zu einer Rücklaufleitung öffnet, verschiebbar. Bei einem hohen Arbeitsdruck befindet sich der Kolben 45 des Stellmotors 32 in einer nach rechts verschobenen Position.

Die bezüglich der Längsachse des im Einzelnen nicht dargestellten Fahrzeugs einander gegenüberliegenden Regeleinrichtungen 31 sind einander gleich, jedoch spiegelbildlich angeordnet. Die Regeleinrichtungen 31 für die Hydromotoren 7, 8 sind aus Vereinfachungsgründen nicht dargestellt.

Jeder Regeleinrichtung 31 ist eine zusätzliche Steuereinrichtung zugeordnet, die allgemein mit 46 bezeichnet ist. Es ist der Zweck der Steuereinrichtung 46 bei einer vorbestimmten Drehzahldifferenz zwischen einem oder mehreren Rädern 11 bis 14 bzw. Hydromotoren 5 bis 8 die Regeleinrichtung 31 zu übersteuern und den jeweiligen Hydromotor 5 bis 8 höherer Drehzahl auf eine geringere Schluckmenge einzustellen. Hierzu dient bei dem vorliegenden bevorzugten Ausführungsbeispiel ein Druckventil 47, das in einem mit dem Steuerleitungsabschnitt 42 bei 48 verbundenen Steuerleitungsabschnitt 49 angeordnet ist, und durch eine elektrische Verbindungsleitung 50 mit einem elektronischen Steuergerät 51 verbunden ist. Bei 48 ist außerdem ein Steuerleitungsabschnitt 52 angeschlossen, der an seinem anderen Ende mit dem Steuerleitungsabschnitt 19 verbunden ist, und in dem ein Rückschlagventil 53 angeordnet ist, das in Richtung auf das Servo-Ventil 35 öffnet.

Im Betrieb des Fahrzeugs ist durch die drehzahlund druckabhängige Verstellung bzw. Regelung der Hydromotoren 5 bis 8 mittels der Regeleinrichtungen 31 gewährleistet, daß auch bei Kurvenfahrt jeder Hydromotor 5 bis 8 bei entsprechender Aufteilung des insgesamt vorhandenen Antriebsmomentes die jeweils erforderliche Schluckmenge erhält. Die Regeleinrichtungen 31 haben sich in der Praxis bewährt.

Allerdings erfolgt bei den Regeleinrichtungen 31 keine Differentialsperrwirkung, wenn eines oder mehrere der Räder 11 bis 14 weniger Bodenhaftung haben als die anderen Räder. In einem solchen Fall drehen das oder diese Rädar und der oder die zugeordneten Hydromotoren durch, was zu einer Beschädigung letzterer führen kann.

Durch die zusätzlichen Steuereinrichtungen 46 wird der vorgenannte Mangel beseitigt. Sobald ein vorbestimmter Drehzahlunterschied zwischen einem oder mehreren Rädern 11 bis 14 eintritt, d.h., wenn eines oder mehrere Räder durchdrehen, was im elektronischen Steuergerät 51 aufgrund der gemessenen Drehzahlen fortlaufend ermittelt wird, wird das dem jeweils hochlaufenden Hydromotor zugeordnete Druckventil 47 durch elektrischen Impuls über die elektrische Verbindungsleitung 50 so geöffnet, so daß der erhöhte Steuerdruck (Speisedruck) aus dem Steuerleitungsabschnitt 21 auf die zugehörige Regeleinrichtung 31 wirken und diese somit übersteuern kann und zwar im Sinne einer Verkleinerung der Schluckmenge. Hierdurch wird die angestrebte Differentialsperrwirkung zwischen den Rädern 11 bis 14 bzw. Hydromotoren 5 bis 8 erzielt, wobei den jeweils nicht hochdrehenden Rädern ein größeres Drehmoment übertragen werden kann und somit die Antriebskraft der Antriebsmaschine ausgenutzt wird.

Der Unterschiedswert der Drehzahlen, bei dem die zusätzlichen Steuereinrichtungen 46 in Funktion treten, ist bestimmbar und im elektronischen Steuergerät 51 gespeichert. Es kann sich z.B. um einen Drehzahlunterschiedswert handeln, der geringfügig oberhalb des Drehzahlunterschiedswertes zwischen zwei bezüglich der Längsachse des Fahrzeugs einander gegenüberliegenden Rädern in deren maximal ausgelenkter Stellung, d.h. bei kleinstem Winkelradius, besteht. Es ist jedoch auch möglich, bei jeweils unterschiedlichen, an die Fahrbedingungen angepaßten Drehzahlunterschiedswerten, die das elektronische Steuergerät 51 ermittelt, die zusätzliche oder zusätzlichen Steuereinrichtungen 46 in Betrieb zu setzen.

Die zusätzlichen Steuereinrichtungen 46 lassen sich in vorteilhafter Weise auch zu einer Drehzahlbegrenzung bei Bergabfahrt benutzen. Hierzu sind die Steuereinrichtungen 46 einschl. das Steuergerät 51 so eingerichtet, daß sie bei einer vorbestimmbaren, z.B. aus der Maximalgeschwindigkeit sich ergebenden Drehzahl aller Räder 11 bis 14 alle Hydromotoren 5 bis 8 bzw. deren Regeleinrichtungen 31 im Sinne einer Vergrößerung der Schluckmenge verstellt. Hierdurch wird die Bremswirkung der Antriebsmaschine vergrößert, weil bei Bergabfahrt die Hydromotoren 5 bis 8 Pumpenfunktion übernehmen, und sich aufgrund des vergrößerten Übersetzungsverhältnis die Drehzahlbegrenzung ergibt.

Um diese Funktion zu ermöglichen ist jedes Druckventil 47 außer seinen die Steuerleitung öffnende und sperrende Betriebsstellungen in eine weitere Betriebsstellung verstellbar, in der es den mit dem Steuerleitungsabschnitt 42 verbundenen Steuerleitungsabschnitt 65 mit einer Rücklaufleitung 66 verbindet und somit den Steuerdruck senkt, was zu der angestrebten Verstellung auf eine größere Schluckmenge führt. Der Steuerleitungsabschnitt 49 bleibt vorzugsweise gesperrt. Es ist auch vorteilhaft, das Druckventil durch ein Wegeventil vorzugsweise mit integrierten Drosseln zu bilden.

In die Steuereinrichtung 46 ist somit eine zweite zusätzliche Steuereinrichtung 67 integriert, die bei Bergabfahrt in Funktion tritt, wenn eine vorbestimmte Drehzahl der Räder 11 bis 14 bzw. Hydromotoren 5 bis 8 erreicht wird.

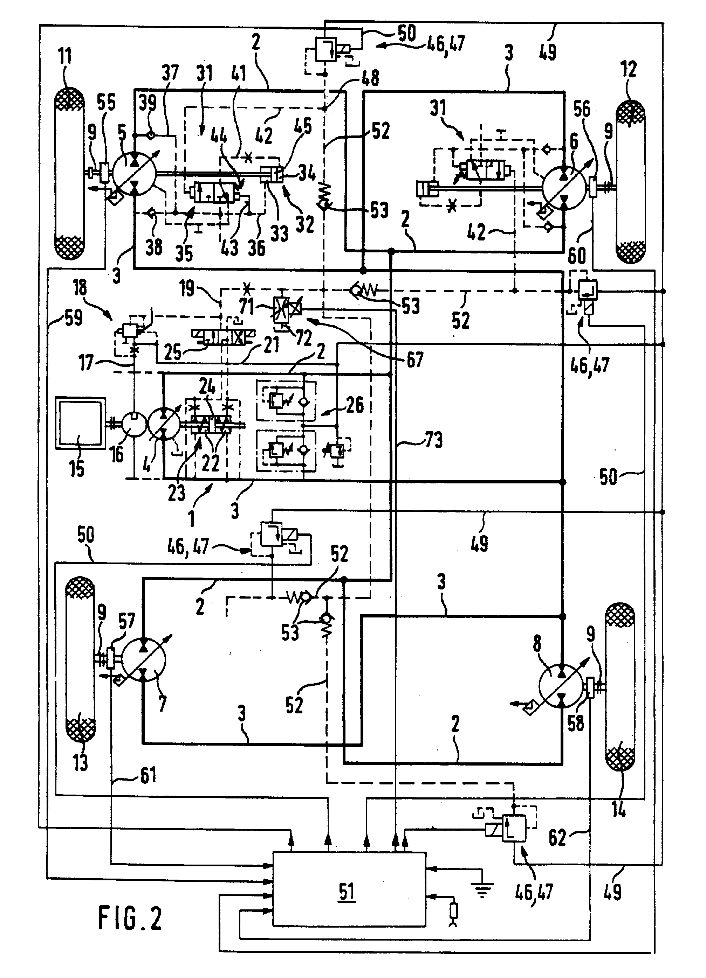

Das Ausführungsbeispiel nach Fig. 2 unterscheidet sich vom vorbeschriebenen dadurch, daß die zweite zusätzliche Steuereinrichtung 67 ein für alle Regeleinrichtungen 31 gemeinsames Steuerventil 71 aufweist, daß im für alle Regeleinrichtungen 31 gemeinsamen Steuerleitungsabschnitt 19 angeordnet und mit einer Rücklaufleitung 72 sowie mittels einer elektrischen Verbindungsleitung 73 mit dem Steuergerät 51 verbunden ist. Bei dem Steuerventil 71 handelt es sich vorzugsweise um eine Porportionaldrossel.

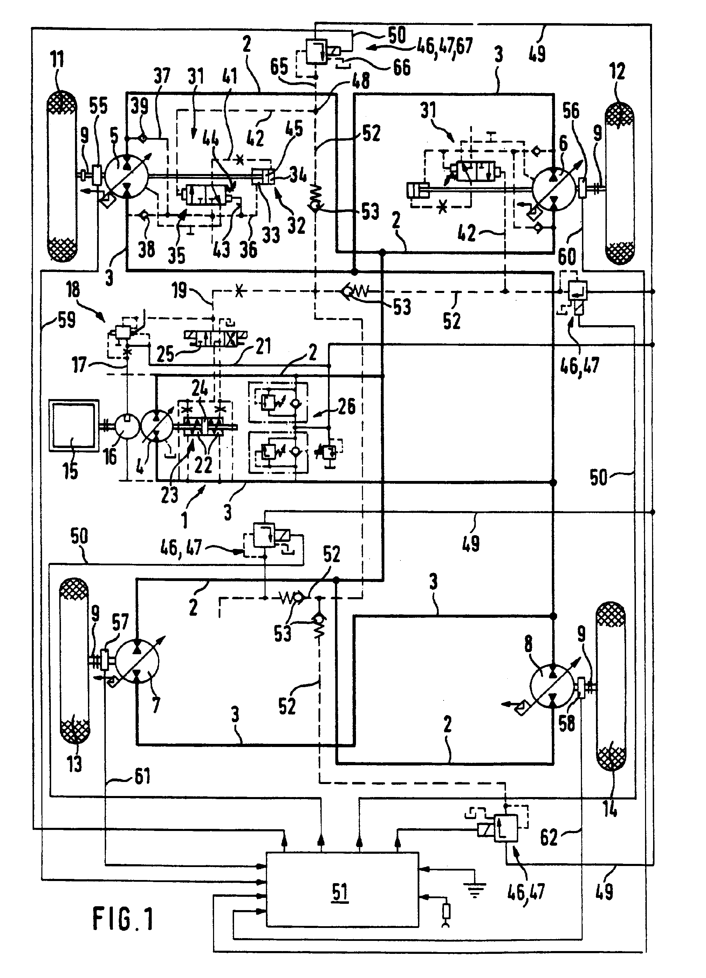

Bei der Ausgestaltung bzw. Anordnung nach Fig. 2 braucht im Unterschied zu Fig. 1 nur das eine, für alle Regeleinrichtungen gemeinsame Steuerventil 71 betätigt zu werden, um die Drehzahlbegrenzung zur Wirkung zu bringen. Hierzu wird das Steuerventil 71 geöffnet, und somit der Steuerdruck in allen Steuerleitungsabschnitten 42 gesenkt, was zur angestrebten Verstellung der Hydromotoren 5 bis 8 auf kleinere Schluckmenge führt.

**Patentansprüche**

1. Hydrostatischer Fahrantrieb für Kraftfahrzeuge mit einem hydrostatischen Getriebe (1), das eine reversierbare Hauptpumpe (4) verstellbaren Fördervolumens und wenigstens zwei Hydromotoren (5 bis 8) verstellbaren Schluckvolumens aufweist, wobei die Hauptpumpe (4) durch eine Antriebsmaschine (15) antreibbar und durch einen mit ihrem Verstellorgan verbundenden Pumpen-Stellmotor (23) verstellbar ist, der mit einem ersten Steuerdruck beaufschlagbar ist, der von einem von einer ebenfalls von der Antriebsmaschine (15) angetriebenen Hilfspumpe (16) erzeugten Druck abgeleitet ist, und wobei jedem Hydromotor (5 bis 8) eine Regeleinrichtung (31) zu dessen Schluckvolumeneinstellung in Abhängigkeit vom Arbeitsdruck des hydrostatischen Getriebes (1) und vom ersten Steuerdruck zugeordnet ist, die einen Servo-Stellmotor (32) aufweist, der durch ein Servoventil (35) steuerbar ist, das den jeweiligen Hydromotor mit zunehmendem Arbeitsdruck in Richtung größeren und mit zunehmendem ersten Steuerdruck zwecks Sekundärverstellung des hydrostatischen Getriebes (1) in Richtung kleineren Schluckvolumens verstellt, **dadurch gekennzeichnet**, daß den Regeleinrichtungen (31) der Hydromotoren (5 bis 8) je ein Steuerventil (47) zugeordnet ist, und daß oberhalb einer vorgegebenen Drehzahldifferenz zwischen den Hydromotoren (5 bis 8) das Servoventil (35) der Regeleinrichtung (31) des jeweils höher drehenden Hydromotors vom zugeordneten Steuerventil (47) mit einem zweiten Steuerdruck in Richtung Verringerung des Schluckvolumens angesteuert wird, welcher zweite Steuerdruck höher als der erste Steuerdruck ist und von der Hilfspumpe (16) erzeugt wird.

2. Hydrostatischer Fahrantrieb für Kraftfahrzeuge, mit einem hydrostatischen Getriebe (1), das eine reversierbare Hauptpumpe (4) verstellbaren Fördervolumens und wenigstens zwei Hydromotoren (5 bis 8) verstellbaren Schluckvolumens aufweist, wobei die Hauptpumpe (4) durch eine Antriebsmaschine (15) antreibbar und durch einen mit ihrem Verstellorgan verbundenden Pumpen-Stellmotor (23) verstellbar ist, der mit einem ersten Steuerdruck beaufschlagbar ist, der von einem von einer ebenfalls von der Antriebsmaschine (15) angetriebenen Hilfspumpe (16) erzeugten Druck abgeleitet ist, und wobei jedem Hydromotor (5 bis 8) eine Regeleinrichtung (31) zu dessen Schluckvolumeneinstellung in Abhängigkeit vom Arbeitsdruck des hydrostatischen Getriebes (1) und vom ersten Steuerdruck zugeordnet ist, die einen Servo-Stellmotor (32) aufweist, der durch ein Servoventil (35) steuerbar ist, das den jeweiligen Hydromotor mit zunehmendem Arbeitsdruck in Richtung größeren und mit zunehmendem ersten Steuerdruck zwecks Sekundärverstellung des hydrostatischen Getriebes (1) in Richtung kleineren Schluctivolumens verstellt, **gekennzeichnet durch** ein den Regeleinrichtungen (31) sämtlicher Hydromotoren (5 bis 8) gemeinsames Steuerventil (71), mit dem bei Überschreiten einer vorgegebenen Drehzahl sämtlicher Hydromotoren (5 bis 8) der erste Steuerdruck zwecks Vergrößerung des Schluckvolumens sämtlicher Hydromotoren (5 bis 8) verringert wird.

3. Fahrantrieb nach Anspruch 1 oder 2, **gekennzeichnet durch** ein elektronisches Steuergerät (51) zur Betätigung der Steuerventile (47 und/oder 71) and durch Drehzahlmesser (55 bis 58), die an jedem Hydromotor (5 bis 8) bzw. jeder zugeordneten Radwelle (9) angeordnet und zur Übermittlung ihrer Meßwerte an das elektronische Steuergerät (51) angeschlossen sind.

4. Fahrantrieb nach Anspruch 1 oder 3, **dadurch gekennzeichnet,** daß die Steuerventile (47) in die jeweils zugeordnete Regeleinrichtung (31) integriert sind.

5. Fahrantrieb nach wenigstens einem der Ansprüche 1, 3 oder 4, **dadurch gekennzeichnet,** daß die Steuerventile (47) in einer Betriebsstellung je eine zur Hilfspumpe (16) führende, den zweiten Steuerdruck enthaltende Steuerleitung (49) mit je einer zum zugeordneten Servoventil (35) führenden, den ersten Steuerdruck enthaltenden Steuerleitung (42) verbinden.

6. Fahrantrieb nach wenigstens einem der Ansprüche 1, 3, 4 oder 5, **dadurch gekennzeichnet,** daß bei Überschreiten einer vorgegebenen Drehzahl sämtlicher Hydromotoren (5 bis 8) die Steuerventile (47) in einer weiteren Betriebsstellung den ersten Steuerdruck zwecks Vergrößerung des Schluckvolumens sämtlicher Hydromotoren (5 bis 8) verringern.

7. Fahrantrieb nach Anspruch 6, **dadurch gekennzeichnet,** daß die Steuerventile (47) in der weiteren Betriebsstellung die jeweilige Steuerleitung (42) über eine Rücklaufleitung (66) mit dem Tank verbinden.

8. Fahrantrieb nach Anspruch 2, **dadurch gekennzeichnet,** daß das sämtlichen Hydromotoren (5 bis 8) gemeinsame Steurventil (71) in einer den ersten Steuerdruck enthaltenden Steuerleitung (19) angeordnet ist, die von der Hilfspumpe (16) zu den an die einzelne Servoventile (35) angeschlossenen Steuerleitungen (42) führt.

9. Fahrantrieb nach wenigstens einem der vorhergehenden Ansprüche, **dadurch gekennzeichnet,** daß die vom Arbeitsdruck und vom ersten sowie zweiten Steuerdruck beaufschlagbaren, an jedem Servoventil (35) in einander entgegengesetzten Richtungen wirkenden Druckflächen an gegenüberliegenden Seiten des Servoventils (35) angeordnet sind.

10. Fahrantrieb nach wenigstens einem der Ansprüche 5 bis 9, **dadurch gekennzeichnet,** daß in Steuerleitungsabschnitten (52), die die Steuerleitungen (42) mit der Steuerleitung (19) verfinden, je ein in Richtung der jeweiligen Steuerleitung (42) öffnendes Rückschlagventil (53) angeordnet ist.

11. Fahrantrieb nach wenigstens einem der Ansprüche 5 bis 10, **dadurch gekennzeichnet,** daß die Steuerleitung (19) über ein Druckreduziervemtil, insbesondere Steuerventil (18), an eine zur Hilfspumpe (16) führende Steuerleitung (17) angeschlossen ist, von der die den zweiten Steuerdruck enthaltenden Steuerleitungen (49) abzweigen.

## Claims

1. A hydrostatic vehicle drive for motor vehicles with a hydrostatic transmission (1) having a reversible main pump (4) of adjustable displacement and at least two hydraulic motors (5 to 8) of adjustable swept volume, wherein the main pump (4) can be driven by a driving engine (15) and can be adjusted by a pump adjusting motor (23), connected to its adjusting means, which can be acted on by a first control pressure derived from a pressure produced by an auxiliary pump (16) likewise driven by the driving engine (15), and wherein associated with each hydraulic motor (5 to 8) is a regulating device (31) for adjusting its swept volume in dependence on the working pressure of the hydrostatic transmission (1) and on the first control pressure, and has a servo-adjusting motor (32) which can be controlled by a servo-valve (35) which adjusts the respective hydraulic motor with increasing working pressure in the direction of greater swept volume and with increasing first control pressure in the direction of smaller swept volume for secondary adjustment of the hydrostatic transmission (1), characterised in that associated with each of the regulating devices (31) of the hydraulic motors (5 to 8) there is a respective control valve (47), and that above a predetermined difference in speed of rotation between the hydraulic motors (5 to 8) the servo-valve (35) of the regulating device (31) of the hydraulic motor rotating faster at the time is adjusted in the direction of a decrease in swept volume by the associated control valve (47) with a second control pressure, said second control pressure being higher than the first control pressure and being produced by the auxiliary pump (16).

2. A hydrostatic vehicle drive for motor vehicles with a hydrostatic transmission (1) having a reversible main pump (4) of adjustable displacement and at least two hydraulic motors (5 to 8) of adjustable swept volume, wherein the main pump (4) can be driven by a driving engine (15) and can be adjusted by a pump adjusting motor (23), connected to its adjusting means, which can be acted on by a first control pressure derived from a pressure produced by an auxiliary pump (16) likewise driven by the driving engine (15), and wherein associated with each hydraulic motor (5 to 8) is a regulating device (31) for adjusting its swept volume in dependence on the working pressure of the hydrostatic transmission (1) and on the first control pressure, and has a servo-adjusting motor (32) which can be controlled by a servo-valve (35) which adjusts the respective hydraulic motor with increasing working pressure in the direction of greater swept volume and with increasing first control pressure in the direction of smaller swept volume for secondary adjustment of the hydrostatic transmission (1), characterised by a control valve (71) common to the regulating devices (31) of all the hydraulic motors (5 to 8) with which, when a predetermined speed of rotation of all the hydraulic motors (5 to 8) is exceeded, the first control pressure is reduced in order to increase the swept volume of all the hydraulic motors (5 to 8).

3. A vehicle drive according to claim 1 or claim 2, characterised by an electronic control device (51) for actuating the control valves (47 and/or 71) and by revolution counters (55 to 58) which are arranged on each hydraulic motor (5 to 8) or each associated wheel shaft (9) and are connected to the electronic control device (51) for transmitting their measuring values.

4. A vehicle drive according to claim 1 or claim 3, characterised in that the control valves (47) are integrated in the respective associated regulating devices (31).

5. A vehicle drive according to at least one of claims 1, 3 or 4, characterised in that in one operating position the control valves (47) each connect a control line (49) containing the second control pressure and leading to the auxiliary pump (16) to a respective control line (42) containing the first control pressure and leading to the associated servo-valve (35).

6. A vehicle drive according to at least one of claims 1, 3, 4 or 5, characterised in that when a predetermined speed of rotation of all the hydraulic motors (5 to 8) is exceeded the control valves (47), in another operating position, reduce the first control pressure in order to increase the swept volume of all the hydraulic motors (5 to 8).

7. A vehicle drive according to claim 6, characterised in that in the other operating position the control valves (47) connect the respective control line (42) to the tank via a return line (66).

8. A vehicle drive according to claim 2, characterised in that the control valve (71) common to all the hydraulic motors (5 to 8) is arranged in a control line (19) containing the first control pressure which leads from the auxiliary pump (16) to the control lines (42) connected to the individual servo-valves (35).

9. A vehicle drive according to at least one of the preceding claims, characterised in that the thrust faces which van be acted on by the working pressure and by the first and second control pressures are arranged on each servo-valve (35) on opposite sides of the servo-valve (35) and act in opposite directions to one another.

10. A vehicle drive according to at least one of claims 5 to 9, characterised in that arranged in each of the control line sections (52), which connect the control lines (42) to the control line (19), is a check valve (53) opening towards the respective control line (42).

11. A vehicle drive according to at least one of claims 5 to 10, characterised in that the control line (19) is connected via a pressure reducing valve, in particular a control valve (18), to a control line (17) leading to the auxiliary pump (16), and from which the control lines (49) containing the second control pressure branch off.

## Revendications

1. Transmission hydrostatique pour véhicules à moteur, avec un mécanisme hydrostatique (1) présentant une pompe principale (4) réversible à débit de refoulement réglable et au moins deux moteurs hydrostatiques (5 à 8) à débit d'aspiration réglable, la pompe principale (4) pouvant être entraînée par une machine motrice (15) et étant réglable par un moteur (23) de réglage de pompe relié à l'organe de réglage de la pompe, ce moteur (23) pouvant être soumis à une première pression de commande qui est dérivée de la pression produite par une pompe auxiliaire (16) également entraînée par la machine motrice (15), tandis qu'à chaque moteur hydrostatique (5 à 8) est associé un dispositif de régulation (31) pour le réglage de son débit d'aspiration en fonction de la pression de travail du mécanisme hydrostatique (1) et de la première pression de commande, ce dispositif de réglage (31) présentant un servo-moteur de réglage (32), qui peut être commandé par une servo-vanne (35), laquelle modifie le réglage du moteur hydrostatique correspondant, lorsque la pression de travail augmente, dans le sens d'un plus grand débit d'aspiration, et lorsque la première pression de commande augmente, le modifie, en vue du réglage secondaire du mécanisme hydrostatique (1), dans le sens d'un plus faible débit d'aspiration, **caractérisée** en ce que, aux dispositifs de régulation (31) des moteurs hydrostatiques (5 à 8) est associée chaque fois une vanne de commande (47), et en ce que, au dessus d'une différence prédéterminée entre les vitesses de rotation des moteurs hydrostatiques (5 à 8), la servo-vanne (35) du dispositif de régulation (31) de celui des moteurs hydrostatiques qui tourne plus vite est commandée, par la vanne de commande (47) associée, avec une deuxième pression de commande dans le sens d'une diminution du volume d'aspiration, cette deuxième pression de commande étant plus élevée que la première pression de commande et étant produite par la pompe auxiliaire (16).

2. Transmission hydrostatique pour véhicules à moteur, avec un mécanisme hydrostatique (1) présentant une pompe principale (4) réversible à débit de refoulement réglable et au moins deux moteurs hydrostatiques (5 à 8) à débit d'aspiration réglable, la pompe principale (4) pouvant être entraînée par une machine motrice (15) et étant réglable par un moteur (23) de réglage de pompe relié à l'organe de réglage de la pompe, ce moteur (23) pouvant être soumis à une première pression de commande dérivée de la pression produite par une pompe auxiliaire (16) également entraînée par la machine motrice (15), tandis qu'à chaque moteur hydrostatique (5 à 8) est associé un dispositif de régulation (31) pour la régulation de son débit d'aspiration en fonction de la pression de travail du mécanisme hydrostatique (1) et de la première pression de commande, ce dispositif présentant un servo-moteur de réglage (32) piloté par une servo-vanne (35) qui modifie le réglage du moteur hydrostatique correspondant dans le sens d'un plus grand débit d'aspiration quand la pression de travail augmente, et dans le sens d'un moindre débit d'aspiration quand la première pression de commande augmente, en vue d'une correction secondaire du réglage du mécanisme hydrostatique (1), **caractérisée** par une vanne de commande (71) commune pour les dispositifs de régulation (31) de tous les moteurs hydrostatiques (5 à 8) au moyen de laquelle, en cas de dépassement d'une vitesse de rotation prédéterminée par tous les moteurs hydrostatiques (5 à 8), la première pression de commande est diminuée dans le but d'augmenter le volume d'aspiration de tous les moteurs hydrostatiques (5 à 8).

3. Transmission selon la revendication 1 ou 2, caractérisée par un dispositif électronique de commande (51) pour actionner les vannes de commande (47 et/ou 71) et par des tachymètres (55 à 58) disposés sur chaque moteur hydrostatique (5 à 8) ou sur chaque arbre de roue associé, et raccordés au dispositif électronique de commande (51) pour la transmission de leurs valeurs de mesure.

4. Transmission selon la revendication 1 ou 3, caractérisée en ce que les vannes de commande (47) sont intégrées respectivement dans le dispositif de régulation (31) associé.

5. Transmission selon au moins une des revendications 1, 3 ou 4, caractérisée en ce que les vannes de commande (47) relient, dans une position de fonctionnement, chaque fois une conduite de commande (49) reliée à la pompe auxiliaire (16) et contenant la deuxième pression de commande, avec, chaque fois une conduite de commande (42) reliée à la servo-vanne (35) associée et contenant la première pression de commande.

6. Transmission selon au moins une des revendications 1, 3, 4 ou 5, caractérisée en ce que, en cas de dépassement d'une vitesse de rotation prédéterminée par tous les moteurs hydrostatiques (5 à 8), les vannes de commande (47) réduisent, dans une autre position de fonctionnement, la première pression de commande dans le but d'accroître le volume d'aspiration de tous les moteurs hydrostatiques (5 à 8).

7. Transmission selon la revendication 6, caractérisée en ce que, dans leur autre position de fonctionnement, les vannes de commande (47) relient la conduite de commande (42) respective au réservoir, par l'intermédiaire d'une conduite de retour (66).

8. Transmission selon la revendication 2, caractérisée en ce que la vanne de commande (71) commune à tous les moteurs hydrostatiques (5 à 8) est disposée dans une conduite de commande (19) contenant la première pression de commande, allant de la pompe auxiliaire (16) aux conduites de commande (42) raccordées à chacune des servo-vannes (35).

9. Transmission selon au moins une des revendications précédentes, caractérisée en ce que les surfaces de pression soumises à la première et à la deuxième pression de commande, agissant, dans chaque servo-vanne (35) dans des directions opposées l'une à l'autre, sont disposées sur des côtés opposés de la servo-vanne (35).

10. Transmission selon au moins une des revendications 5 à 9, caractérisée en ce qu'une soupape de retenue (53) s'ouvrant en direction de la conduite de commande (42) respective est disposée dans les tronçons (52) de conduite de commande reliant les conduites de commande (42) à la conduite de commande (19).

11. Transmission selon au moins une des revendications 5 à 10, caractérisée en ce que la conduite de commande (19) est raccordée, par l'intermédiaire d'une vanne réductrice de pression, en particulier la vanne de commande (18), à une conduite de commande (17) allant à la pompe auxiliaire (16), à partir de laquelle se ramifient les conduites de commande (49) contenant la deuxième pression de commande.

FIG.1

FIG.2